# FASCICULE DE BREVET EUROPEEN

(11) **EP 1 016 589 B1**
(45) Date de publication et mention de la délivrance du brevet: **03.09.2003**
(21) Numéro de dépôt: 99403279.5
(22) Date de dépôt: 24.12.1999
(51) Int. Cl.: B64C 13/40, B64C 13/42, B64C 13/50

(54) **nrocédé et système de commande d'une gouverne d'un aéronef à actionnement par vérins hydrauliques multiples et à puissance modulable**
Verfahren und Vorrichtung zur Bedienung der Steuerflächen eines Flugzeuges durch mehrere hydraulische Aktuatoren mit modulierter Leistung
System and method for controlling an aeroplane control surface using multiple hydraulic actuators with modulating power

(30) Priorité: 28.12.1998 FR 9816495
(43) Date de publication de la demande: 05.07.2000
(73) Titulaire: AIRBUS France, 31060 Toulouse Cedex 03 (FR)
(72) Inventeur: Gautier, Jean-Pierre, 31000 Toulouse (FR); Peransin-Delage, Cécile, 31530 Montaigut Sur Save (FR)
(74) Mandataire: Weber, Etienne Nicolas

(56) Documents cités:
- GB-A- 2 196 910
- US-A- 4 598 890
- H.H. STRAUB ET AL: "747-400 upper rudder contrsl system" AEROSPACE ENGINEERING,juin 1992 (1992-06), pages 11-14, XP002113572

## Description

### Domaine technique

La présente invention concerne un système de commande de gouverne d'un aéronef à vérins hydrauliques multiples et un procédé de gestion du fonctionnement des vérins d'actionnement de la gouverne.

Le système de l'invention peut être mis en oeuvre sur des avions, en particulier sur des avions de transport commerciaux et des avions supersoniques. Il peut être appliqué par exemple aux gouvernes de bord de fuite telles que les gouvernes de direction, de profondeur, ou les ailerons, ou à toute autre gouverne de l'aéronef.

### Etat de la technique antérieure

Généralement les gouvernes des aéronefs sont actionnées par plusieurs actionneurs à servocommande, et alimentés en énergie par un ou plusieurs circuits hydrauliques.

Un aéronef peut être équipé en effet d'une pluralité de circuits hydrauliques pressurisés à partir des propulseurs. Il peut être équipé également de circuits hydrauliques autonomes pressurisés par une électro-pompe.

Les actionneurs peuvent comporter un seul ou plusieurs vérins hydrauliques. On peut se reporter à ce sujet aux documents (1), qui montre toutes les caractéristiques du préambule des revendications independantes, et (2) dont les références sont précisées à la fin de la présente description.

Le nombre de vérins et leurs dimensions sont déterminés en fonction des charges aérodynamiques maximales susceptibles d'être exercées sur les gouvernes correspondantes.

Par ailleurs, le débit hydraulique nécessaire pour manoeuvrer les gouvernes est proportionnel à l'amplitude et à la vitesse de débattement de celles-ci.

Or, l'amplitude de débattement des gouvernes et la vitesse de débattement sont généralement maximaux lors des phases d'atterrissage ou de décollage.

Lors de ces phases de vol, un certain nombre d'autres actionneurs, tel que les actionneurs gouvernant la rentrée ou la sortie des trains d'atterrissage nécessitent également un débit hydraulique important.

Il en résulte que pour faire face aux débits hydrauliques importants requis lors des phases d'atterrissage et de décollage, les circuits hydrauliques de l'aéronef doivent être très largement dimensionnés. Les circuits hydrauliques posent par conséquent des problèmes d'encombrement et de masse.

### Exposé de l'invention

La présente invention a pour but de proposer un système de commande de gouverne d'aéronef pouvant fonctionner avec des circuits hydrauliques réduits, tout en permettant de manoeuvrer les gouvernes dans des conditions de vol dans lesquelles les charges aérodynamiques sont maximales.

Un autre but est de proposer un système de commande pouvant fonctionner avec un débit hydraulique réduit lors des phases de décollage et d'atterrissage, c'est-à-dire notamment lors de la mise en fonctionnement d'autres équipements, tels que les trains d'atterrissage, également consommateurs de puissance hydraulique.

Un but est encore de proposer un tel système dont les actionneurs peuvent être agencés plus facilement dans des profils minces tels que des éléments de voilure, en minimisant la taille des carénages.

Pour atteindre ces buts, l'invention a plus précisément pour objet un système de commande d'une gouverne d'un aéronef comprenant au moins un actionneur de la gouverne équipé d'au moins deux vérins de puissance aptes à fonctionner selon au moins un mode activé et un mode désactivé. Conformément à l'invention, le système de commande comporte une unité de commande apte à faire fonctionner dans un mode activé un nombre de vérins dépendant des conditions de vol de l'aéronef. En particulier, l'unité de commande peut être conçue pour déterminer un effort à exercer sur la gouverne, et être reliée audit actionneur pour faire fonctionner dans un mode activé un nombre de vérins fonction dudit effort à exercer.

La gouverne est manoeuvrée par un ou plusieurs actionneurs qui peuvent être respectivement reliés à différents circuits hydrauliques de l'aéronef.

On entend par mode activé, un mode de fonctionnement d'un vérin de puissance dans lequel celui-ci participe activement au débattement d'une gouverne en exerçant sur la gouverne des forces provoquant le débattement. Dans le cas d'un vérin hydraulique à deux chambres, les chambres sont alors reliées à une source de puissance hydraulique telle qu'un circuit hydraulique fournissant de l'énergie au vérin pour actionner la gouverne.

Le mode désactivé est un mode de fonctionnement dans lequel le vérin de puissance suit le mouvement de la gouverne sans pour autant le provoquer. Dans le cas d'un vérin hydraulique, les chambres du vérin sont alors généralement reliées entre elles à travers un restricteur pour amortir le mouvement de la gouverne.

Lorsque les efforts à exercer sur la gouverne sont faibles, ce qui est le cas typiquement lorsque la vitesse de l'aéronef est faible, seul un nombre réduit des vérins équipant au moins un actionneur, par exemple un unique vérin, peut être mis en oeuvre dans le mode activé.

Ainsi, grâce à l'invention, lors du décollage ou de l'atterrissage, lorsque l'amplitude et la vitesse de débattement des gouvernes sont importantes, mais l'effort à exercer est faible, seul un nombre réduit des vérins équipant un actionneur, peut être alimenté en énergie.

Dans le cas de vérins hydrauliques équipant un actionneur, le fait de ne relier qu'un faible nombre de vérins au circuit hydraulique alimentant cet actionneur, permet de ne requérir qu'un faible débit de fluide sous pression. Une partie de l'énergie hydraulique est donc disponible pour d'autres équipements, tels que des vérins d'actionnement pour la sortie ou la rentrée des trains d'atterrissage.

A l'inverse, lorsque les efforts à exercer sont importants, c'est-à-dire notamment lors de vitesses élevées de l'aéronef, un nombre plus important, voire tous les vérins équipant au moins un actionneur peuvent être commandés pour fonctionner dans le mode activé.

Les vitesses importantes de l'aéronef sont atteintes lors d'une phase de vol dite de croisière. Lors de cette phase de vol les efforts à exercer sur les gouvernes sont certes importants mais l'amplitude et la vitesse de débattement des gouvernes sont généralement faibles. Dans le cas de vérins hydrauliques, tous les vérins équipant un actionneur peuvent alors être reliés au circuit hydraulique alimentant cet actionneur sans requérir un débit de fluide trop important.

Ainsi, grâce à l'invention, des systèmes hydrauliques moins importants peuvent être mis en oeuvre, et les vérins équipant un actionneur, plus petits, peuvent être logés dans des carénages de faible volume ou des profils minces. Ces avantages sont particulièrement intéressants pour des avions supersoniques.

Selon une réalisation particulière du système de l'invention, l'unité de commande est reliée à un capteur de position de la gouverne et à un organe de pilotage. Elle peut comporter alors un calculateur programmé pour déterminer un nombre de vérins minimum équipant au moins un actionneur, nécessaires pour provoquer un débattement de la gouverne avec une amplitude correspondant à un ordre de pilotage provenant de l'organe de pilotage.

Selon une variante, l'unité de commande peut aussi être associée à des moyens de calcul et d'élaboration d'ordres de commande de vol selon des phases de vol déterminées. L'unité de commande est alors prévue pour associer à chaque phase de vol un nombre déterminé de vérins équipant un actionneur, devant fonctionner dans le mode activé.

Les moyens de calcul et d'élaboration d'ordres de commande de vol peuvent comporter un calculateur de l'aéronef équipé d'une ou de plusieurs unités de calcul redondantes. Un tel calculateur permet de distinguer, par exemple, des phases de vol telles que le décollage, la montée initiale, la phase de croisière, de descente, d'approche et finalement de roulage.

Il est possible d'associer de façon déterminée à chaque phase de vol, un certain nombre de vérins équipant un actionneur devant fonctionner dans le mode activé, et un certain nombre de vérins fonctionnant dans le mode désactivé.

A titre d'illustration, le calculateur peut être programmé, pour une gouverne donnée, de façon à faire fonctionner pour un actionneur donné dans le mode activé un seul vérin dans les phases de décollage et de roulage, pour en faire fonctionner deux dans les phases de montée initiale et d'approche, et pour en faire fonctionner trois dans les phases de croisière et de descente.

Selon une autre variante de mise en oeuvre du système de l'invention, l'unité de commande peut encore être associée à des moyens de mesure d'une vitesse de l'aéronef et être conçue pour faire fonctionner pour un actionneur donné, dans le mode activé, un nombre de vérins croissant avec la vitesse de l'aéronef.

L'unité de commande peut être programmée dans ce cas de façon à faire fonctionner, pour un actionneur donné, un seul vérin dans une gamme de vitesses faibles de l'aéronef et à faire fonctionner un nombre de vérins supérieur ou égal à deux dans des gammes de vitesse moyenne et élevée.

En effet comme évoqué précédemment, à vitesse élevée, les efforts à exercer sur les gouvernes sont importants et il est donc souhaitable de faire fonctionner dans le mode activé un plus grand nombre de vérins. L'activation d'un grand nombre de vérins ne requiert cependant pas un débit hydraulique élevé dans la mesure où à grande vitesse de l'aéronef, le débattement des gouvernes est généralement faible, et s'effectue à faible vitesse.

Dans une gamme de vitesses faibles de l'aéronef, lors desquelles une amplitude de débattement et un débit hydraulique importants sont requis, mais lors desquelles les efforts à fournir sont modérés, un nombre plus faible des vérins équipant un actionneur peut être activé.

Dans une réalisation particulière des actionneurs d'une gouverne, ceux-ci peuvent comporter des blocs de commande associés aux vérins qui les équipent, ces blocs étant pilotés à partir de l'unité de commande, pour faire fonctionner de façon sélective les vérins selon un mode activé ou un mode désactivé.

A titre d'exemple, pour des vérins hydrauliques qui comportent deux chambres de vérins séparées par un piston mobile, les blocs de commande peuvent comporter des tiroirs de mode permettant de sélectivement relier les chambres des vérins à au moins une source de puissance hydraulique dans un mode activé, et de relier les chambres des vérins entre elles éventuellement à travers un restricteur, dans le mode désactivé.

Un tiroir de mode peut être associé respectivement à chaque vérin équipant un actionneur.

Selon un aspect particulier de l'invention, au moins l'un des vérins équipant un actionneur peut être associé à un tiroir de mode à trois positions permettant de relier les chambres du vérin entre elles dans le mode désactivé, de relier les chambres du vérin à un circuit hydraulique par l'intermédiaire d'une servovalve dans un premier mode activé, et de relier, dans un deuxième mode activé, les chambres du vérin à un module électrohydrostatique formant une source de puissance hydraulique locale et autonome.

Selon un autre aspect particulier de l'invention, un actionneur peut comporter au moins deux vérins équipés chacun d'un tiroir de mode, dans lequel au moins un des vérins est associé à une servovalve reliée au circuit hydraulique, qui forme une première source de puissance hydraulique, et dans lequel au moins un des vérins est associé à un module électrohydrostatique autonome formant une deuxième source de puissance hydraulique locale.

L'invention concerne également un procédé de commande d'une gouverne d'un aéronef équipé d'au moins un actionneur équipé d'au moins deux vérins pouvant fonctionner sélectivement dans un mode activé ou un mode désactivé. Selon ce procédé, on fait fonctionner dans le mode activé un nombre de vérins dépendant de la vitesse de l'aéronef, ou d'autres conditions particulières comme la phase de vol.

Dans une mise en oeuvre particulière du procédé, on peut faire fonctionner un seul vérin équipant au moins un actionneur dans le mode activé lorsque la vitesse de l'aéronef est comprise dans une première gamme de vitesses faibles et on peut faire fonctionner dans le mode activé deux vérins ou plus, équipant au moins un actionneur lorsque la vitesse de l'aéronef est comprise dans une deuxième gamme de vitesses supérieures aux vitesses de la première gamme.

Comme évoqué précédemment, on peut déterminer ledit nombre de vérins à activer en fonction de phases de vol correspondant à des vitesses déterminées.

Enfin, on peut également faire fonctionner, sélectivement dans un mode activé ou un mode désactivé, un nombre de vérins équipant un actionneur dépendant d'un effort à exercer sur la gouverné pour obtenir un débattement souhaité.

D'autres caractéristiques et avantages de la présente invention ressortiront mieux de la description qui va suivre, en référence aux figures des dessins annexés. Cette description est donnée à titre purement illustratif et non limitatif.

### Brève description des figures

- La figure 1 est un diagramme représentant en fonction de différentes phases de vol l'évolution typique des charges aérodynamiques subies par les gouvernes d'un aéronef et de leur vitesse maximale de débattement.
- La figure 2 est une représentation schématique simplifiée des principaux éléments d'un système de commande de gouverne conforme à l'invention.
- La figure 3 est une représentation schématique simplifiée et agrandie d'un détail de la figure 2 correspondant à une mise en oeuvre particulière de l'invention.
- La figure 4 est une représentation schématique simplifiée et agrandie d'un détail de la figure 2 correspondant à une seconde mise en oeuvre particulière de l'invention.
- La figure 5 est une représentation schématique simplifiée et agrandie d'un détail de la figure 2 correspondant à une troisième mise en oeuvre particulière de l'invention.

### Description détaillée de modes de mise en oeuvre de l'invention

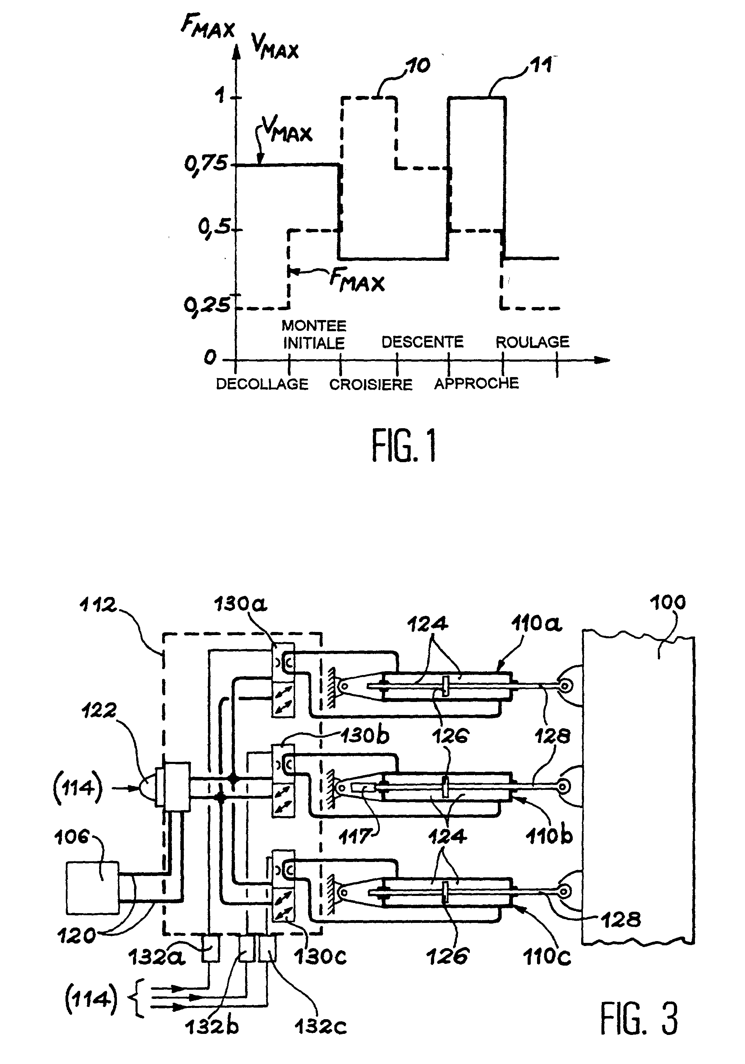

Le diagramme de la figure 1 indique en sa partie inférieure différentes phases de vol d'un aéronef, et indique en ordonnée, d'une part la charge aérodynamique maximale F_{MAX} subie par une gouverne et d'autre part une vitesse maximale V_{MAX} de débattement requis pour la gouverne.

L'axe des ordonnées est gradué en échelle arbitraire entre 0 et 1.

Les différentes phases de vol sont dans l'ordre de la figure le décollage, la montée initiale, la phase de croisière, la descente, l'approche et la phase de roulage.

A chaque phase de vol correspond une gamme de vitesses de l'aéronef. Les vitesses sont élevées lors de la phase de croisière et, dans une moindre mesure, lors de la phase de descente. Les vitesses de l'aéronef par contre sont nettement plus faibles lors du décollage, de la montée initiale, de l'approche et de la phase de roulage.

Une ligne discontinue 10 montre une évolution typique de la charge aérodynamique exercée sur une gouverne lors des différentes phases de vol.

Lors des phases de croisière et de descente, c'est-à-dire lorsque la vitesse de l'aéronef est grande, on observe que la charge aérodynamique est élevée. Les efforts à exercer par les vérins sur la gouverne sont par conséquent importants et il convient, conformément à l'invention, de faire fonctionner un nombre plus important des vérins équipant un actionneur donné pour manoeuvrer la gouverne.

A l'inverse, lors des phases de montée initiale, d'approche, mais aussi de décollage et de roulage, les charges aérodynamiques et donc les efforts à exercer sont plus faibles. Un nombre réduit des vérins équipant un actionneur donné peut alors être activé. Ainsi, dans le cas de vérins hydrauliques, une quantité de fluide hydraulique sous pression plus réduite peut être mise en oeuvre et un débit hydraulique plus important peut être réservé à d'autres équipements de l'aéronef.

La ligne continue 11 de la figure 1 indique une évolution typique de la vitesse de débattement maximale V_{MAX} de la gouverne pour chaque phase de vol.

On observe que les phases de vol correspondant aux charges aérodynamiques maximales sont aussi celles pour lesquelles les vitesses de débattement V_{MAX} sont les plus faibles.

Ainsi, lors de ces phases, l'appel de fluide hydraulique nécessaire à l'actionnement de la gouverne reste modéré même lorsque plusieurs vérins d'un actionneur sont actionnés.

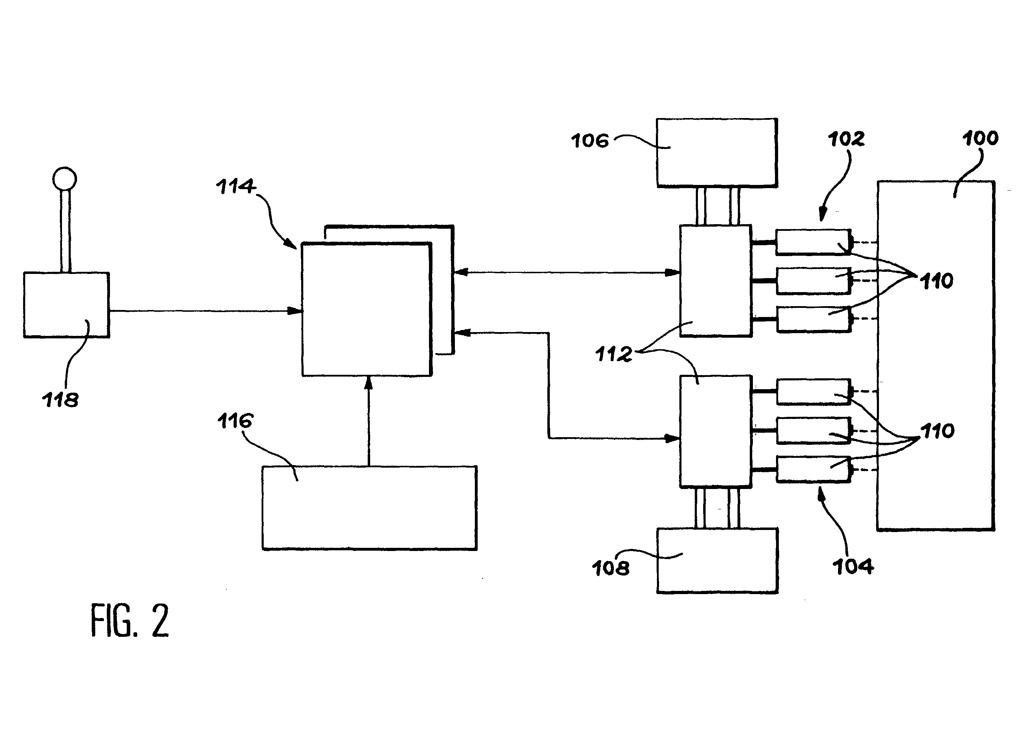

La figure 2 représente de façon très simplifiée un certain nombre d'éléments d'un système de commande de gouverne conforme à l'invention.

Une gouverne 100 telle que, par exemple, une gouverne de direction, est actionnée au moyen de deux actionneurs 102, 104 reliés respectivement à deux circuits hydrauliques différents 106, 108 et équipés chacun de trois vérins hydrauliques repérés par les références 110.

Chaque actionneur comporte également un bloc de commande 112 permettant de faire fonctionner les vérins dans un mode désactivé ou un mode activé et permettant de distribuer aux vérins activés une puissance hydraulique proportionnelle à des ordres de commande de vol.

Les ordres de commande de vol et des ordres destinés à faire fonctionner un nombre variable de vérins dans le mode activé ou le mode désactivé sont établis par un calculateur 114 équipé d'une ou de plusieurs unités de calcul et qui forme l'unité de commande des actionneurs au sens de l'invention.

Le calculateur 114 est relié à un certain nombre d'équipements de mesure de paramètres de vol tel que, par exemple, des dispositifs de mesure de la vitesse de l'aéronef. Ces équipements sont repérés globalement avec la référence 116.

Enfin des organes de pilotage 118, tel qu'un manche ou un palonnier, par exemple, sont reliés au calculateur afin d'y transmettre des ordres de pilotage.

Comme évoqué précédemment, le calculateur 114 permet de contrôler pour chaque actionneur le nombre de vérins fonctionnant dans un mode activé. Comme chaque actionneur est équipé de trois vérins, le nombre de vérins fonctionnant dans le mode activé peut varier de 1 à 6 ou de 2 à 6 si les deux actionneurs fonctionnent de façon simultanée.

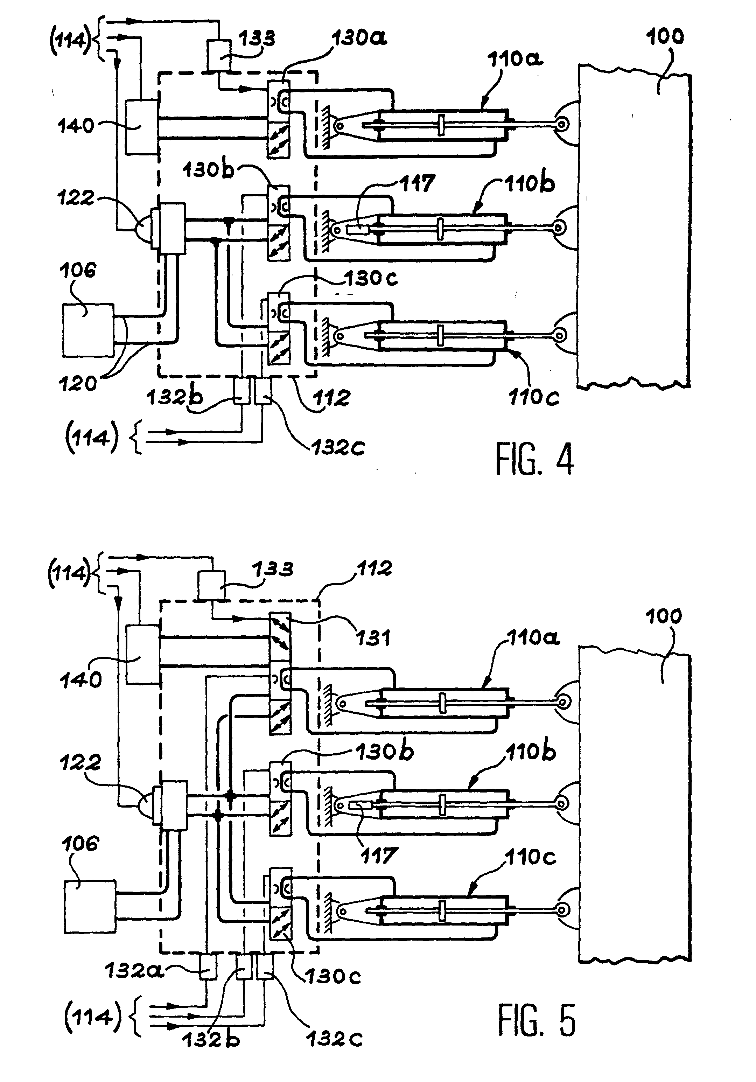

La figure 3 montre de façon plus détaillée la réalisation d'un actionneur de la gouverne.

Pour des raisons de simplification, des éléments de la figure 3 et des figures suivantes qui sont identiques, similaires ou équivalents à des éléments de la figure 2, sont repérés avec les mêmes références numériques.

Le bloc de commande 112 est représenté de façon très schématique sur la figure 3. Il présente une entrée et une sortie 120 de fluide hydraulique reliées à un circuit hydraulique 106 et une servovalve 122. La servovalve reçoit des ordres électriques élaborés par le calculateur 114 (non représenté) et distribue aux vérins, lorsque ceux-ci fonctionnent dans le mode activé, un débit de fluide hydraulique dépendant des ordres électriques reçus. Sur la figure 3 les ordres électriques sont simplement représentés par une flèche.

Les vérins de puissance, repérés par les références 110a, 110b et 110c comportent chacun deux chambres de vérin, séparées par un piston 126. Le piston de chaque vérin est solidaire d'une tige de vérin 128, reliée à la gouverne 100. On peut remarquer que les vérins de puissance sont représentés séparés sur les figures 2 à 5. Toutefois, dans une réalisation particulière, ils peuvent aussi être accolés.

Les blocs de commande 112 sont équipés pour chaque vérin d'un tiroir de mode, 130a, 130b, 130c. Les tiroirs de mode 130a, 130b, 130c représentés à la figure 3 sont respectivement pilotés par des électrovannes 132a, 132b, 132c, pilotées par le calculateur 114, de façon à faire occuper aux tiroirs de mode l'une parmi deux positions, correspondant respectivement aux modes de fonctionnement activé et désactivé des vérins.

Dans une première position des tiroirs de mode, les chambres des vérins correspondants sont reliées entre elles à travers un restricteur. Le vérin fonctionne alors dans un mode désactivé ou amorti dans lequel il "suit" passivement le mouvement de la gouverne.

Dans une seconde position des tiroirs de mode, ceux-ci relient les chambres des vérins correspondants au circuit hydraulique 106 par l'intermédiaire de la servovalve 122. Les vérins sont alors dans un mode activé et les déplacements du piston et de la tige sont proportionnels au débit de fluide fourni par la servovalve, c'est-à-dire proportionnel aux ordres de commande de vol fournis à la servovalve par le calculateur.

L'actionnement d'une ou de plusieurs électrovannes 132a, 132b, 132c par le calculateur permet de déplacer les tiroirs de mode et de faire passer les vérins correspondants du mode activé au mode désactivé, et inversement.

On peut observer que l'un des vérins 110b est équipé d'un capteur de déplacement 117 de la tige 128, permettant, par exemple, un asservissement des vérins par l'intermédiaire du calculateur 114.

La figure 4 montre une variante de réalisation du bloc de commande 112 et de l'alimentation en énergie des vérins.

Sur la figure 4, seuls deux vérins 110b, 110c peuvent être reliés au circuit hydraulique 106 par l'intermédiaire de la servovalve 122 (dans le mode activé). Les tiroirs de mode 130b et 130c de ces vérins sont pilotés par des électrovannes 132b, 132c.

Le tiroir de mode 130a du premier vérin 110a est déplacé par un solénoïde 133 piloté à partir du calculateur 114 (visible à la figure 2). Dans une première position, le tiroir de mode 130a relie entre elles les chambres 124 du vérin. Cette position correspond, comme indiqué précédemment, au mode désactivé.

Dans une deuxième position, correspondant au mode activé, le tiroir de mode relié les chambres du vérin à une unité électrohydrostatique autonome 140. L'unité électrohydrostatique 140 est équipée d'une électro-pompe et est alimentée en énergie électrique. Elle est capable de délivrer une puissance hydraulique proportionnelle à des ordres de commande qui sont fournis par le calculateur. De même que pour la servovalve, les ordres de commande provenant du calculateur sont représentés par une simple flèche.

Dans le mode de réalisation de la figure 4, le circuit hydraulique 106 forme une première source de puissance hydraulique et le module électrohydrostatique 140 forme une seconde source de puissance hydraulique.

Grâce à cet arrangement, la puissance mécanique fournie à la gouverne peut être modulée et peut être prélevée sur deux sources de puissance indépendantes. La fiabilité du fonctionnement est améliorée et la taille des circuits hydrauliques peut être davantage réduite.

Une autre possibilité de réalisation des blocs de commande et des sources d'énergie est représentée à la figure 5.

Le dispositif de la figure 5 est identique à celui de la figure 4 à l'exception du fait que le premier tiroir de mode à deux positions est remplacé par un tiroir de mode 131 à trois positions. Ce tiroir de mode peut être actionné à la fois par un solénoïde 133 et par une électrovanne 132a. Ces équipements sont pilotés par le calculateur non représenté (mais visible sur la figure 2).

Dans une première position du tiroir de mode (solénoïde excité) les chambres du vérin 110a sont reliées au module électrohydrostatique 140. Dans une deuxième position du tiroir de mode les chambres du vérin 110a sont reliées au circuit hydraulique 106 par l'intermédiaire de la servovalve 122. Enfin, dans une troisième position du tiroir de mode, (électrovanne 132a et solénoïde désexcités) les chambres du vérin 110a sont reliées entre elles.

Le premier vérin 110a peut donc fonctionner selon un mode désactivé et selon deux modes activés distincts dans lesquels il est relié à des sources de puissance distinctes.

Les deux autres vérins 110b et 110c fonctionnent seulement selon un seul mode activé ou un mode désactivé, de la façon décrite précédemment.

Un tel mode de réalisation permet d'augmenter encore la fiabilité du système de commande.

Finalement, grâce à l'invention, la puissance des actionneurs peut être modulée en activant un nombre variable de vérins. La multiplication du nombre de vérins permet de réduire leur taille individuelle et le caractère modulable de la puissance des actionneurs, en fonction des conditions ou des phases de vol, permet de réduire la dimension des équipements de puissance et en particulier la dimension des équipements hydrauliques requis.

Un système de commande de gouvernes conforme à l'invention peut être appliqué à différentes gouvernes d'un aéronef et s'avère particulièrement intéressant pour les avions gros-porteurs, en raison de la diminution de la masse et de l'encombrement des circuits hydrauliques, et pour les avions supersoniques, en raison de la taille réduite des vérins individuels.

### DOCUMENTS CITES

***(1)***
   747-400 upper rudder control system, pages 11-14 Aerospace Engineering - June 1992
***(2)***
   FR-2 569 787 - B1.

## Revendications

1. Système de commande d'une gouverne (100) d'un aéronef comprenant au moins un actionneur (102, 104) de la gouverne, relié à un circuit hydraulique (106), et équipé d'au moins deux vérins de puissance (110) aptes à fonctionner selon au moins un mode activé et un mode désactivé, **caractérisé en ce qu'**il comporte en outre une unité de commande (114) apte à faire fonctionner dans un mode activé un nombre de vérins dépendant des conditions de vol de l'aéronef.

2. Système selon la revendication 1, dans lequel l'unité de commande (114) est reliée à au moins un capteur de position de la gouverne (117), à des équipements de mesure de paramètres de vol de l'aéronef (116) et à un organe de pilotage (118), et est programmée pour déterminer un nombre de vérins minimum nécessaire pour provoquer un débattement de la gouverne avec une amplitude correspondant à un ordre de pilotage provenant de l'organe de pilotage.

3. Système selon la revendication 1, dans lequel l'unité de commande est associée à des moyens de calcul et d'élaboration d'ordres de commande de vol selon des phases de vol déterminées, et dans lequel l'unité de commande est programmée pour associer à chaque phase de vol un nombre prédéterminé de vérins devant fonctionner dans le mode activé.

4. Système selon la revendication 1, dans lequel l'unité de commande est associée à des moyens de mesure d'une vitesse de l'aéronef et est apte à faire fonctionner dans le mode activé un nombre de vérins dépendant de la vitesse de l'aéronef.

5. Système de commande de gouverne selon la revendication 1, dans lequel chaque actionneur comporte des blocs de commande (112) associés aux vérins de puissance, pilotés par l'unité de commande (114), pour faire fonctionner les vérins de façon sélective selon un mode activé ou un mode désactivé.

6. Système selon la revendication 5, dans lequel les vérins comportent deux chambres de vérin (124) séparées par un piston mobile (126) et dans lequel les blocs de commande comportent des tiroirs de mode (130a, 130b, 130c, 131) permettant de sélectivement relier les chambres des vérins à au moins une source de puissance hydraulique (106, 140) dans un mode activé, et de relier les chambres des vérins entre elles dans le mode désactivé.

7. Système selon la revendication 6 dans lequel un tiroir de mode est respectivement associé à chaque vérin.

8. Système selon la revendication 6 comportant une servovalve (122) reliée au circuit hydraulique (106) et apte à délivrer aux vérins un flux hydraulique dans le mode activé, le circuit hydraulique formant une première source de puissance hydraulique.

9. Système selon la revendication 8, dans lequel chaque actionneur comporte au moins deux vérins, équipés chacun d'un tiroir de mode et dans lequel la servovalve est reliée à chacun des tiroirs de mode.

10. Système selon la revendication 8, dans lequel au moins l'un des vérins (110a) est associé à un tiroir de mode (131) à trois positions permettant de relier les chambres du vérin entre elles dans le mode désactivé, de relier les chambres du vérin à la servovalve (122) dans un premier mode activé et de relier les chambres du vérin à un module électrohydrostatique autonome (140) dans un deuxième mode activé, le module électrohydrostatique formant une deuxième source de puissance hydraulique, locale et autonome.

11. Système selon la revendication 6, dans lequel au moins un actionneur comporte au moins deux vérins de puissance, équipés chacun d'un tiroir de mode, dans lequel au moins un des vérins est associé à une servovalve (122) reliée au circuit hydraulique (106) formant une première source de puissance hydraulique, et dans lequel au moins un des vérins (110a) est associé à un module électrohydrostatique autonome (140) formant une deuxième source de puissance hydraulique locale.

12. Procédé de commande d'une gouverne d'un aéronef, manoeuvrée par- au moins un actionneur, l'actionneur étant relié à un circuit hydraulique et équipé d'au moins deux vérins de puissance pouvant fonctionner sélectivement dans un mode activé ou un mode désactivé, dans lequel on fait fonctionner dans le mode activé un nombre de vérins dépendant de la vitesse de l'aéronef.

13. Procédé selon la revendication 12, dans lequel on fait fonctionner un seul vérin dans le mode activé lorsque la vitesse de l'aéronef est comprise dans au moins une première gamme de vitesses faibles et dans lequel on fait fonctionner au moins deux vérins dans le mode activé lorsque la vitesse est comprise dans au moins une deuxième gamme de vitesses supérieures aux vitesses de la première gamme.

14. Procédé selon la revendication 12, dans lequel on détermine ledit nombre de vérins en fonction de phases de vol correspondant à des vitesses déterminées.

15. Procédé de commande d'une gouverne d'un aéronef, manoeuvrée par au moins un actionneur, l'actionneur étant relié à un circuit hydraulique et équipé d'au moins deux vérins de puissance pouvant fonctionner sélectivement dans un mode activé ou un mode désactivé, dans lequel on fait fonctionner dans le mode activé un nombre de vérins dépendant d'un effort à exercer sur la gouverne pour obtenir un débattement souhaité.

## Patentansprüche

1. System zum Steuern einer Steuerfläche (100) eines Luftfahrzeugs mit mindestens einem Aktuator bzw. Stellglied (102,104) der Steuerfläche, der bzw. das mit einem Hydraulikkreis (106) verbunden und mit mindestens zwei Kraftzylindern (110) versehen ist, die mindestens gemäß einem aktivierten Modus und einem nicht-aktivierten Modus funktionieren können,
**dadurch gekennzeichnet, dass** es außerdem eine Steuereinheit (114) umfasst, welche eine Anzahl von Zylindern in Abhängigkeit von den Flugzuständen des Luftfahrzeugs in einem aktivierten Modus betreiben kann.

2. System nach Anspruch 1, wobei die Steuereinheit (114) mit mindestens einem Positionsfühler (117) der Steuerfläche, mit Messvorrichtungen (116) für Flugparameter des Luftfahrzeugs und mit einem Steuerelement (118) verbunden und so programmiert ist, dass sie eine notwendige Minimalzahl von Zylindern festlegen kann, um einen Ausschlag der Steuerfläche mit einer Amplitude hervorzurufen, die einem von dem Steuerelement kommenden Steuerbefehl entspricht.

3. System nach Anspruch 1, wobei die Steuereinheit mit Mitteln zum Berechnen und zum Erstellen von Flug-Steuerbefehlen gemäß bestimmter Flugphasen verbunden ist, und wobei die Steuereinheit so programmiert ist, dass sie jeder Flugphase eine vorbestimmte Anzahl von Zylindern zuordnet, die im aktivierten Modus funktionieren sollen.

4. System nach Anspruch 1, wobei die Steuereinheit mit Mitteln zum Messen einer Geschwindigkeit des Luftfahrzeugs verbunden ist und eine Anzahl von Zylindern in Abhängigkeit von der Geschwindigkeit des Luftfahrzeugs im aktivierten Modus funktionieren lassen kann.

5. System zur Steuerung der Steuerfläche nach Anspruch 1, wobei jeder/jedes Aktuator bzw. Stellglied Steuerblöcke (112) aufweist, die den von der Steuereinheit (114) gesteuerten Kraftzylindern zugeordnet sind, um die Zylinder auf selektive Weise gemäß einem aktivierten oder einem nicht-aktivierten Modus funktionieren zu lassen.

6. System nach Anspruch 5, wobei die Zylinder zwei Zylinderkammern (124) umfassen, die durch einen beweglichen Kolben (126) getrennt sind, und wobei die Steuerblöcke Modus-Schieber (130a,130b,130c,131) aufweisen, die in einem aktivierten Modus eine selektive Verbindung der Zylinderkammern mit mindestens einer hydraulischen Kraftquelle (106,140) und im nicht-aktivierten Modus die Verbindung der Zylinderkammern untereinander gestatten.

7. System nach Anspruch 6, wobei jedem Zylinder jeweils ein Modus-Schieber zugeordnet ist.

8. System nach Anspruch 6, mit einem Servoventil (122), das mit dem Hydraulikkreis (106) verbunden ist und den Zylindern im aktivierten Modus einen Hydraulikstrom liefern kann, wobei der Hydraulikkreis eine erste hydraulische Kraftquelle bildet.

9. System nach Anspruch 8, wobei jeder/jedes Aktuator bzw. Stellglied mindestens zwei Zylinder umfasst, die jeweils mit einem Modus-Schieber versehen sind, und wobei das Servoventil mit jedem der Modus-Schieber verbunden ist.

10. System nach Anspruch 8, wobei mindestens einer der Zylinder (110a) einem Modus-Schieber (131) mit drei Positionen zugeordnet ist, was es ermöglicht, die Zylinderkammern im nicht-aktivierten Modus untereinander zu verbinden, die Zylinderkammern in einem ersten aktivierten Modus mit dem Servoventil (122) zu verbinden und die Zylinderkammern in einem zweiten aktivierten Modus mit einem autonomen elektrohydrostatischen Modul (140) zu verbinden, wobei das elektrohydrostatische Modul eine zweite, lokale und autonome hydraulische Kraftquelle bildet.

11. System nach Anspruch 6, wobei mindestens ein Aktuator bzw. Stellglied mindestens zwei Kraftzylinder umfasst, die jeweils mit einem Modus-Schieber versehen sind, wobei mindestens einer der Zylinder einem mit dem eine erste hydraulische Kraftquelle bildenden Hydraulikkreis (106) verbundenen Servoventil (122) zugeordnet ist, und wobei mindestens einer der Zylinder (110a) einem eine zweite lokale hydraulische Kraftquelle bildenden autonomen elektrohydrostatischen Modul (140) zugeordnet ist.

12. Verfahren zur Steuern einer Steuerfläche eines Luftfahrzeugs, die durch mindestens ein(en) Aktuator bzw. Stellglied betätigt wird, wobei der/das Aktuator bzw. Stellglied mit einem Hydraulikkreis verbunden ist und mit mindestens zwei Kraftzylindern versehen ist, die selektiv in einem aktivierten Modus oder einem nicht-aktivierten Modus arbeiten können, wobei eine Anzahl von Zylindern in Abhängigkeit von der Geschwindigkeit des Luftfahrzeugs betätigt wird.

13. Verfahren nach Anspruch 12, wobei ein einzelner Zylinder im aktivierten Modus betätigt wird, wenn die Geschwindigkeit des Luftfahrzeugs in zumindest einem ersten Bereich geringer Geschwindigkeiten liegt, und wobei mindestens zwei Zylinder im aktivierten Modus betätigt werden, wenn die Geschwindigkeit in zumindest einem zweiten Bereich von Geschwindigkeiten liegt, die höher sind als die Geschwindigkeiten des ersten Bereichs.

14. Verfahren nach Anspruch 12, wobei die Anzahl von in Flugphasen in Funktion befindlichen Zylindern entsprechend bestimmten Geschwindigkeiten festgelegt wird.

15. Verfahren zum Steuern einer Steuerfläche eines Luftfahrzeugs, die durch mindestens ein(en) Aktuator bzw. Stellglied betätigt wird, wobei der Aktuator mit einem Hydraulikkreis verbunden und mit mindestens zwei Kraftzylindern versehen ist, die selektiv in einem aktivierten Modus oder einem nicht-aktivierten Modus funktionieren können, wobei eine Anzahl von Zylindern in Abhängigkeit von einer auf die Steuerfläche auszuübenden Kraft zum Erreichen eines gewünschten Ausschlags im aktivierten Modus betätigt werden.

## Claims

1. Control system for a control surface (100) of an aircraft comprising at least one actuator (102, 104) of the control surface, connected to a hydraulic circuit (106) and equipped with at least two power jacks (110) capable of operating in at least one activated mode and one deactivated mode, **characterized in that** it also comprises a control unit (114) capable of making a number of jacks operate in activated mode depending on the aircraft flight conditions.

2. System according to claim 1, wherein the control unit (114) is connected to at least one position sensor for the control surface (117), measurement equipment for aircraft flight parameters (116) and a piloting device (118) and is programmed to determine a minimum number of jacks necessary to cause a movement of the control surface with an amplitude corresponding to piloting order originating from the piloting device.

3. System according to claim 1, in which the control unit is used with means of calculating and distributing flight control orders depending on determined flight phases, and wherein the control unit is programmed to associated pre-determined number of jacks that will operate in activated mode, during flight phase.

4. System according to claim 1, wherein the control unit is associated with means of measuring the aircraft speed and is capable of making a number of jacks operate in activated mode depending on the aircraft speed.

5. Control surface control system according to claim 1, wherein each actuator comprises control blocks (112) associated with power jacks controlled by the control unit (114) to make the jacks operate selectively in an activated mode or a deactivated mode.

6. System according to claim 5, wherein the jacks comprise two jack chambers (124) separated by a mobile piston (126) and wherein the control blocks comprise mode drawers (130a, 130b, 130c, 131) that selectively connect jack chambers to at least one hydraulic power source (106, 140) in an activated mode, and to connect jack chambers to each other in deactivated mode.

7. System according to claim 6, wherein a mode drawer is associated with each jack respectively.

8. System according to claim 6, comprising a servo valve (122) connected to the hydraulic circuit (106) and capable of producing a hydraulic flow to the jacks in activated mode, the hydraulic circuit forming a first hydraulic power source.

9. System according to claim 8, wherein each actuator comprises at least two jacks, each equipped with a mode drawer and wherein the servo valve is connected to each of the mode drawers.

10. System according to claim 8, wherein at least one of the jacks (110a) is associated with a three-position mode drawer (131) forming a passage between jack chambers in deactivated mode, connecting jack chambers to the servo valve (122) in a first activated mode, and connecting jack chambers to a standalone electro-hydrostatic module (140) in a second activated mode, the electro-hydrostatic module forming a second local and standalone hydraulic power source.

11. System according to claim 6, wherein at least one actuator comprises at least two power jacks, each equipped with a mode drawer, and wherein at least one of the jacks is associated with a servo valve (122) connected to the hydraulic circuit (106) forming a first hydraulic power source, and wherein at least one of the jacks (110a) is associated with a standalone electro-hydrostatic module (140) forming a second local hydraulic power source.

12. Control process for an aircraft control surface maneuvered by at least one actuator, the actuator being connected to a hydraulic circuit and equipped with at least two power jacks capable of operation selectively in activated mode or deactivated mode, wherein a number of jacks that depend on the aircraft speed are made to operate in activated mode.

13. Process according to claim 12, wherein a single jack is made to operate in activated mode when the aircraft speed is within at least one first low speed range and wherein at least two jacks are made to operate in activated mode when the speed is in at least one second speed range exceeding speeds in the first range.

14. Process according to claim 12, wherein the said number of jacks is determined as a function of the flight phase corresponding to defined speeds.

15. Control process for an aircraft control surface maneuvered by at least one actuator, the actuator being connected to a hydraulic circuit and equipped with at least two power jacks capable of operating selectively in activated mode or deactivated mode, wherein a number of jacks depending on the force to be exerted on the control surface are made to operate in activated mode in order to obtain a required movement.
